# EUROPEAN PATENT APPLICATION

(11) **EP 4 796 584 A1**
(43) Date of publication of application: **26.08.2026**
(21) Application number: 26158091.4
(22) Date of filing: 12.02.2026
(51) Int. Cl.: C08K 3/04, C08L 79/08, G03G 15/16

(54) **INTERMEDIATE TRANSFER BODY, TRANSFER UNIT, AND IMAGE FORMING APPARATUS**

(30) Priority: 25.02.2025 JP 2025028348; 08.01.2026 JP 2026002361
(71) Applicant: FUJIFILM Business Innovation Corp., Minato-ku Tokyo (JP)
(72) Inventor: FURUKAWA, Masato, Ebina-shi, Kanagawa (JP); INAGAKI, Tomotake, Ebina-shi, Kanagawa (JP); TANAKA, Hiroaki, Minamiashigara-shi, Kanagawa (JP)
(74) Representative: Becker Kurig & Partner Patentanwälte mbB

(57) **Abstract**

An intermediate transfer body includes a semiconductive layer containing at least one resin selected from the group consisting of a polyimide resin, a polyamideimide resin, an aromatic polyether ether ketone resin, a polyphenylene sulfide resin, and a polyetherimide resin, conductive carbon particles, and at least one silicone oil selected from the group consisting of dimethyl polysiloxane and an organic group-substituted dimethyl polysiloxane, in which a number of conductive paths calculated based on three-dimensional structural analysis of a cross section of the semiconductive layer in a thickness direction is 110 or more, and a value obtained by subtracting a volume resistivity ρv (log Ω·cm) of the semiconductive layer from a surface resistivity ρs (log Ω/□) of the semiconductive layer is 1.5 or more and 2.0 or less.

## Description

### BACKGROUND OF THE INVENTION

### (i) Field of the Invention

The present disclosure relates to an intermediate transfer body, a transfer unit, and an image forming apparatus.

### (ii) Description of Related Art

JP2016-57525A discloses an intermediate transfer belt including, as a topmost layer, a semiconductive film containing a resin and conductive agent particles, in which a volume resistivity is 1 × 10⁵ Ω·cm or more and 1 × 10¹² Ω·cm or less, and a number of conductive paths calculated based on three-dimensional structural analysis of a cross section in a thickness direction is 110 or more.

### SUMMARY OF THE INVENTION

An object of the present disclosure is to provide an intermediate transfer body in which density unevenness and color spots are less likely to occur in an image.

Specific methods for achieving the above-described object include the following aspects.
<1> According to a first aspect of the present disclosure, there is provided an intermediate transfer body including:
   a semiconductive layer containing
      at least one resin selected from the group consisting of a polyimide resin, a polyamideimide resin, an aromatic polyether ether ketone resin, a polyphenylene sulfide resin, and a polyetherimide resin,
      conductive carbon particles, and
      at least one silicone oil selected from the group consisting of dimethyl polysiloxane and an organic group-substituted dimethyl polysiloxane,
   in which a number of conductive paths calculated based on three-dimensional structural analysis of a cross section of the semiconductive layer in a thickness direction is 110 or more, and
   a value obtained by subtracting a volume resistivity pv (log Ω·cm) of the semiconductive layer from a surface resistivity ps (log Ω/□) of the semiconductive layer is 1.5 or more and 2.0 or less.
<2> According to a second aspect of the present disclosure, there is provided the intermediate transfer body according to <1>,
   in which the surface resistivity ps of the semiconductive layer may be 8.0 log Ω/□ or more and 12.0 log Ω/□ or less.
<3> According to a third aspect of the present disclosure, there is provided the intermediate transfer body according to <1> or <2>,
   in which the volume resistivity pv of the semiconductive layer may be 7.0 log Ω·cm or more and 11.0 log Ω·cm or less.
<4> According to a fourth aspect of the present disclosure, there is provided the intermediate transfer body according to any one of <1> to <3>,
   in which a number average particle diameter of the conductive carbon particles is 15 nm or more and 35 nm or less.
<5> According to a fifth aspect of the present disclosure, there is provided the intermediate transfer body according to any one of <1> to <3>,
   in which a number average particle diameter of the conductive carbon particles is 21 nm or more and 30 nm or less.
<6> According to a sixth aspect of the present disclosure, there is provided the intermediate transfer body according to any one of <1> to <5>,
   in which the number of conductive paths may be 200 or less.
<7> According to a seventh aspect of the present disclosure, there is provided the intermediate transfer body according to any one of <1> to <6>,
   in which the silicone oil may include, as an organic group-substituted dimethyl polysiloxane, an aralkyl-modified silicone oil.
<8> According to an eighth aspect of the present disclosure, there is provided the intermediate transfer body according to any one of <1> to <7>,
   in which a surface adsorption force at a temperature of 11°C and a relative humidity of 15% is 3.8 nN or less.
<9> According to a nineth aspect of the present disclosure, there is provided the intermediate transfer body according to any one of <1> to <8>,
   in which the conductive carbon particles are exposed on a surface of the intermediate transfer body, and an area ratio of exposed portions of the conductive carbon particles occupying the surface is 33% or more.
<10> According to a tenth aspect of the present disclosure, there is provided a transfer unit including:
   the intermediate transfer body according to any one of <1> to <9>;
   a primary transfer device that transfers a toner image formed on a surface of a photoreceptor to a surface of the intermediate transfer body; and
   a secondary transfer device that transfers the toner image transferred to the surface of the intermediate transfer body to a surface of a recording medium.
<11> According to an eleventh aspect of the present disclosure, there is provided an image forming apparatus including:
   a photoreceptor;
   a charging device that charges a surface of the photoreceptor;
   an electrostatic charge image forming device that forms an electrostatic charge image on the charged surface of the photoreceptor;
   a developing device that develops, with a developer containing a toner, the electrostatic charge image formed on the surface of the photoreceptor into a toner image; and
   a transfer device that transfers the toner image formed on the surface of the photoreceptor to a surface of a recording medium,
   in which the transfer device includes the intermediate transfer body according to any one of <1> to <9>, a primary transfer device that transfers the toner image formed on the surface of the photoreceptor to a surface of the intermediate transfer body, and a secondary transfer device that transfers the toner image transferred to the surface of the intermediate transfer body to the surface of the recording medium.

According to <1>, <2>, <3>, <4>, <5>, or <6>, there is provided an intermediate transfer body in which density unevenness is less likely to occur in an image as compared with an intermediate transfer body in which the number of conductive paths of the semiconductive layer is less than 110, and an intermediate transfer body in which color spots are less likely to occur in an image as compared with an intermediate transfer body in which the value of ps - pv of the semiconductive layer is less than 1.5.

According to <7>, there is provided an intermediate transfer body in which color spots are less likely to occur in an image as compared with an intermediate transfer body in which the semiconductive layer contains a polyether-modified silicone oil and does not contain an aralkyl-modified silicone oil.

According to <8>, there is provided an intermediate transfer body having excellent in maintaining cleaning performance as compared with an intermediate transfer body in which a surface adsorption force at a temperature of 11°C and a relative humidity of 15% is 3.8 nN or less.

According to <9>, there is provided an intermediate transfer body having excellent in maintaining cleaning performance as compared with an area ratio of exposed portions of the conductive carbon particles occupying the surface is 33% or more.

According to <10>, there is provided a transfer unit in which density unevenness is less likely to occur in an image as compared with a transfer unit in which the number of conductive paths of the semiconductive layer of the intermediate transfer body is less than 110, and a transfer unit in which color spots are less likely to occur in an image as compared with a transfer unit in which the value of ps - pv of the semiconductive layer of the intermediate transfer body is less than 1.5.

According to <11>, there is provided an image forming apparatus in which density unevenness is less likely to occur in an image as compared with an image forming apparatus in which the number of conductive paths of the semiconductive layer of the intermediate transfer body is less than 110, and an image forming apparatus in which color spots are less likely to occur in an image as compared with an image forming apparatus in which the value of ps - pv of the semiconductive layer of the intermediate transfer body is less than 1.5.

### BRIEF DESCRIPTION OF THE DRAWINGS

Exemplary embodiment(s) of the present invention will be described in detail based on the following figures, wherein:
FIG. 1 is a schematic perspective view showing an exemplary embodiment of an intermediate transfer body.
FIG. 2 is a schematic diagram for describing a method of calculating the number of conductive paths.
FIG. 3 is a schematic plan view (A) and a schematic cross-sectional view (B) showing an example of a circular electrode.
FIG. 4 is a schematic configuration diagram showing an example of an image forming apparatus.

### DETAILED DESCRIPTION OF THE INVENTION

The exemplary embodiments of the present disclosure will be described below. The description and examples of these exemplary embodiments illustrate the exemplary embodiments and do not limit the scopes of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit value or lower limit value of one numerical range may be replaced with the upper limit value or lower limit value of another numerical range described in stages. In addition, in the present disclosure, the upper limit or lower limit of a numerical range may be replaced with values described in examples.

In the present disclosure, "A and/or B" is synonymous with "at least one of A or B". That is, "A and/or B" represents that A alone may be used, B alone may be used, or a combination of A and B may be used.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual, and a relative relationship between the sizes of the members is not limited thereto.

In the present disclosure, each component may include a plurality of corresponding substances. In a case where the amount of each component in a composition is mentioned in the present disclosure, and there are a plurality of types of substances corresponding to each component in the composition, unless otherwise specified, the amount of each component means the total amount of the plurality of types of substances present in the composition.

In the present disclosure, each component may include two or more types of corresponding particles. In a case where there are two or more types of particles corresponding to each component in a composition, unless otherwise specified, the particle size of each component means a value for a mixture of two or more types of the particles present in the composition.

In the present disclosure, an alkyl group and an alkylene group include all linear, branched, and cyclic shapes unless otherwise specified.

In the present disclosure, a hydrogen atom in an organic group, an aromatic ring, a linking group, an alkyl group, an alkylene group, an aryl group, an aralkyl group, an alkoxy group, an aryloxy group, and the like may be substituted with a halogen atom.

In the present disclosure, in a case where a lamination relationship of layers constituting the intermediate transfer body is expressed by "upper layer" and "lower layer", a layer close to a photoreceptor is referred to as the "upper layer", and a layer far from the photoreceptor is referred to as the "lower layer", assuming a form mounted in the image forming apparatus.

In the present disclosure, "log" means the common logarithm (log10).

### <Intermediate Transfer Body>

The intermediate transfer body according to the present disclosure includes a semiconductive layer containing at least one resin selected from the group consisting of a polyimide resin, a polyamideimide resin, an aromatic polyether ether ketone resin, a polyphenylene sulfide resin, and a polyetherimide resin, conductive carbon particles, and at least one silicone oil selected from the group consisting of dimethyl polysiloxane and an organic group-substituted dimethyl polysiloxane, in which a number of conductive paths calculated based on three-dimensional structural analysis of a cross section of the semiconductive layer in a thickness direction is 110 or more, and a value obtained by subtracting a volume resistivity pv (log Ω·cm) of the semiconductive layer from a surface resistivity ps (log Q/o) of the semiconductive layer is 1.5 or more and 2.0 or less.

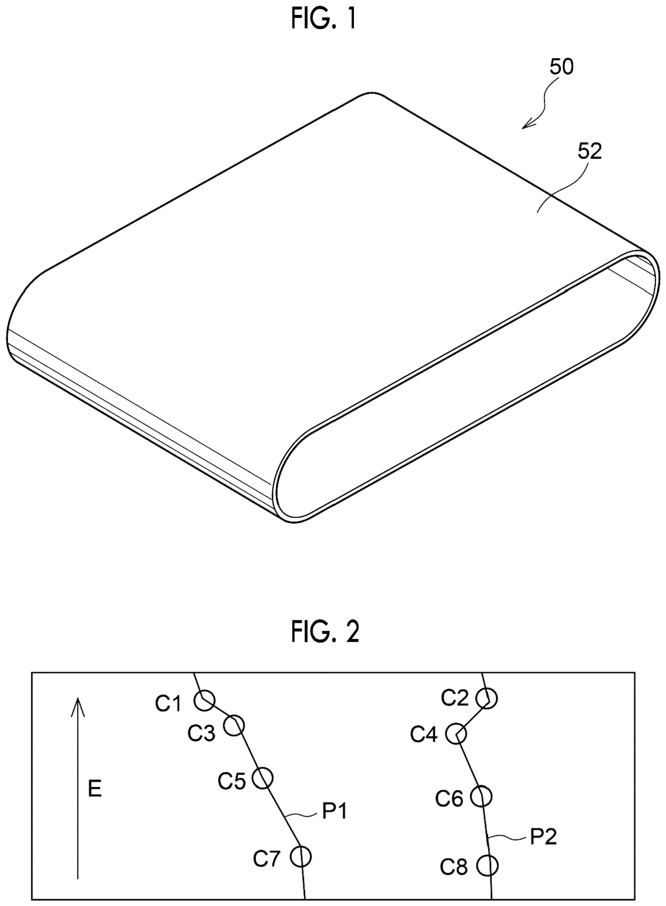

FIG. 1 is a schematic perspective view showing an example of the intermediate transfer body according to the present disclosure. An intermediate transfer body 50 shown in FIG. 1 is an endless belt-like member. The intermediate transfer body 50 includes a semiconductive layer 52.

The intermediate transfer body according to the present disclosure is not limited to the form shown in FIG. 1, and may be in a form of a roll or a sheet. The intermediate transfer body according to the present disclosure may include a layer other than the semiconductive layer. Examples of the other layer include a metal layer disposed below the semiconductive layer and a fluororesin layer disposed above the semiconductive layer.

In an intermediate transfer body according to the present disclosure, density unevenness and color spots are less likely to occur in an image. The mechanism is assumed as follows.

In a case where the number of conductive paths of the semiconductive layer of the intermediate transfer body is relatively large, the uniformity of conductivity in the semiconductive layer is ensured and density unevenness is less likely to occur in the image. However, in a case where the number of conductive paths of the semiconductive layer is relatively large, a difference (ps - pv) between the surface resistivity ps and the volume resistivity pv tends to be small. In this case, discharge is likely to occur between the intermediate transfer body and the primary transfer roll, and as a result, color spots may occur in the image.

On the other hand, in the intermediate transfer body according to the present disclosure, since the value of ps - pv of the semiconductive layer is 1.5 or more, discharge is unlikely to occur between the intermediate transfer body and the primary transfer roll, and as a result, color spots are less likely to occur in the image. The value of ps - pv being 1.5 or more can be realized, for example, by containing conductive carbon particles having a relatively large particle diameter in the semiconductive layer to suppress the value of the volume resistivity pv to a low level. The conductive carbon particles having a relatively large particle diameter have poor dispersibility in a case of forming the semiconductive layer, but in a case where the silicone oil is used together, since the silicone oil acts as a dispersant, the conductive carbon particles are dispersed and the number of conductive paths of 110 or more is realized. As a result, density unevenness is also less likely to occur in the image.

In a case where the number of conductive paths of the semiconductive layer of the intermediate transfer body is less than 110, density unevenness may occur in the image. From the viewpoint of suppressing the occurrence of density unevenness, the number of conductive paths of the semiconductive layer is 110 or more, and is, for example, more preferably 115 or more.

From the viewpoint of making the value of ps - pv 1.5 or more, the number of conductive paths of the semiconductive layer of the intermediate transfer body is, for example, preferably 200 or less, more preferably 180 or less, still more preferably 160 or less, and even still more preferably 150 or less.

A value (ps - pv) obtained by subtracting the volume resistivity pv (log Ω·cm) from the surface resistivity ps (log Ω/□) of the semiconductive layer of the intermediate transfer body is 1.5 or more and 2.0 or less.

In a case where the value of ps - pv is less than 1.5, color spots may occur in the image. From the viewpoint of suppressing the occurrence of color spots, the value of ps - pv is 1.5 or more, and is, for example, preferably 1.6 or more.

From the viewpoint of ease of realization, the value of ps - pv is appropriate to be 2.0 or less.

From the viewpoint of controlling the value of ps - pv to be 1.5 or more and 2.0 or less, the surface resistivity ps and the volume resistivity pv of the semiconductive layer of the intermediate transfer body are each, for example, preferably the following values.

The surface resistivity ps (log Ω/□) of the semiconductive layer is, for example, preferably 8.0 or more and 12.0 or less, more preferably 9.0 or more and 12.0 or less, and still more preferably 9.5 or more and 11.5 or less.

The volume resistivity pv (log Ω·cm) of the semiconductive layer is, for example, preferably 7.0 or more and 11.0 or less, more preferably 8.0 or more and 10.5 or less, and still more preferably 8.5 or more and 10.2 or less.

In a case where the semiconductive layer constitutes a surface of the intermediate transfer body onto which a toner image is transferred and the conductive carbon particles are exposed on the surface of the intermediate transfer body, an area ratio of exposed portions of the conductive carbon particles occupying the surface is, for example, preferably 33% or more, more preferably 33% or more and 50% or less, and still more preferably 34% or more and 40% or less.

The surface of the intermediate transfer body onto which a toner image is transferred is an outer peripheral surface in a case where the intermediate transfer body is in the form of a belt or a roll.

An area ratio of exposed portions of the conductive carbon particles on a surface of the intermediate transfer body can be controlled by a particle diameter and a content of the conductive carbon particles to be contained in the intermediate transfer body. The ranges of the particle diameter and the content of the conductive carbon particles are as described later.

In a case where the semiconductive layer constitutes a surface of the intermediate transfer body onto which a toner image is transferred, from the viewpoint of excellent maintenance of cleaning performance, a surface adsorption force of the surface of the intermediate transfer body at a temperature of 11°C and a relative humidity of 15% is, for example, preferably 3.8 nN or less, more preferably 1.9 nN or more and 3.6 nN or less, and still more preferably 1.9 nN or more and 3.4 nN or less.

The surface adsorption force of the semiconductive layer of the intermediate transfer body can be controlled by an area ratio of exposed portions of the conductive carbon particles. The range of the area ratio of the exposed portions of the conductive carbon particles is as described above.

Hereinafter, a method of obtaining the number of conductive paths, the surface resistivity, the volume resistivity, and an area ratio and a surface adsorption force of the exposed portion of the conductive particles of the semiconductive layer of the intermediate transfer body will be described.

### [Number of Conductive Paths]

Data input to an algorithm for calculating the number of conductive paths is three-dimensional coordinates of the conductive carbon particles contained in the semiconductive layer. First, the three-dimensional coordinates are acquired by focused ion beam scanning electron microscopes (FIB-SEM) and three-dimensional image analysis.

A rectangular parallelepiped having a width of 1 mm is cut out from the semiconductive layer of the intermediate transfer body, and is embedded with an epoxy resin. The embedded material is subjected to cross-section processing with a microtome to form a block cross section in which a cross section in a thickness direction of the semiconductive layer is visible. The sample with the formed block cross section is fixed to the sample stage of a FIB-SEM (FIB-SEM Helios NanoLab 600i, FEI Company USA), and a vapor deposition treatment is performed. FIB processing and SEM observation of the block cross-section are repeated with the FIB-SEM instrument, thereby two-dimensional stacking images are obtained. The SEM observation is performed at an enlarged magnification at which the conductive carbon particles dispersed in the sample can be observed.

The two-dimensional stacking images are input to three-dimensional image analysis software (Avizo-Fire, VSG), thereby a three-dimensional image is formed. From the formed three-dimensional image, the three-dimensional coordinates of the conductive carbon particles dispersed in the semiconductive layer are acquired.

Next, the number of conductive paths is calculated from the three-dimensional coordinates of the conductive carbon particles according to the following algorithm.

A rectangular parallelepiped is appropriate as a sample to be subjected to the algorithm for calculating the number of conductive paths. In a case where a flat plate electrode is brought into contact with an upper surface (for example, a square surface of 1 µm × 1 µm) and a lower surface of the rectangular parallelepiped (for example, 1 µm in length × 1 µm in width × 0.5 µm in thickness) as the sample, and a voltage is applied between the electrodes, assume that one conductive path is formed from a particle closest to the electrode on the upper surface as a starting point to a particle closest to the lower surface by connecting adjacent particles through which the current easily flows.

From the three-dimensional coordinates of the conductive carbon particles contained in the sample, a spatial distance from a certain conductive carbon particle (referred to as a "carbon particle at the starting point") to all other conductive carbon particles (referred to as "other carbon particles") is calculated.

Next, in a case where a plane that has the carbon particle at the starting point and is orthogonal to the orientation of the electric field is set as the virtual surface, another carbon particle (referred to as a "next carbon particle") is selected that is present on a downstream side (lower side) in a direction of the orientation of the electric field than the virtual surface, and has a shortest distance. Specifically, the following calculation processing is performed to select the next carbon particle.

A distance between the carbon particle at the starting point and the other carbon particle is calculated by weighting elements of the spatial distance and elements of the orientation of the electric field. That is, a value is obtained by dividing the square of the spatial distance between the carbon particles by the inner product of the electric field and the distance between the carbon particles according to the following expression. The carbon particle that the value is minimum is selected as the next carbon particle. In a case where two or more next carbon particles having the shortest distance are present, all of the carbon particles are selected, and the conductive path is branched from the carbon particle at the starting point.$min \left(\frac{{\left|{r}_{i , j}\right|}^{2}}{{\overline{r}}_{i , j} ⋅ \overline{E}}\right) = min \left(\frac{\left|{r}_{i , j}\right|}{\left|E\right| cos {θ}_{i , j}}\right)$

In the expression, i and j represent numbers of the carbon particles, E represents the electric field, r represents the spatial distance between the carbon particles, and θ represents an angle formed by a straight line connecting two carbon particles and the electric field.

FIG. 2 is a schematic diagram for describing a method of calculating the number of conductive paths. In the form shown in FIG. 2, the carbon particle C3 is selected for the carbon particle C1, and the carbon particle C4 is selected for the carbon particle C2. Next, the same processing is performed on the carbon particle C3 and the carbon particle C4. Then, the carbon particle C5 is selected for the carbon particle C3, and the carbon particle C6 is selected for the carbon particle C4. This processing is repeated to detect a conductive path P1 connected from the carbon particle C1 to the carbon particle C7 and a conductive path P2 connected from the carbon particle C2 to the carbon particle C8.

In a case where the conductive path is branched from a certain carbon particle at the starting point, each branch is counted as one conductive path.

For example, in a region (a rectangular parallelepiped of 1 µm in length × 1 µm in width × 0.5 µm in thickness) of 1 µm square at the center portion of the semiconductive layer and at a depth of 0.5 µm from the exposed surface of the semiconductive layer, the conductive path is detected according to the above-described algorithm, and the total number thereof is defined as the "number of conductive paths".

### [Surface Resistivity ps and Volume Resistivity pv]

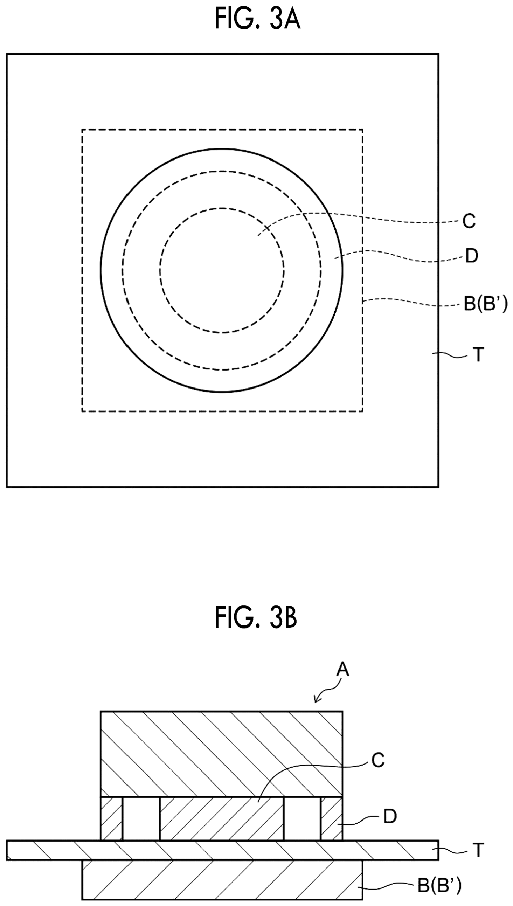

The surface resistivity ps and the volume resistivity pv of the semiconductive layer of the intermediate transfer body are values measured according to JIS K6911: 1995 "General test methods for thermosetting plastics" using a circular electrode. A method of measuring the surface resistivity and the volume resistivity of the semiconductive layer will be described with reference to FIG. 3.

In a case where the intermediate transfer body includes only the semiconductive layer, the intermediate transfer body is used as a sample. In a case where the intermediate transfer body includes the semiconductive layer and other layers, the semiconductive layer is peeled off from the intermediate transfer body, and the semiconductive layer is used as a sample.

### -Surface Resistivity-

FIG. 3 is a schematic plan view and a schematic cross-sectional view showing an example of a circular electrode. The circular electrode is, for example, a UR probe for Hiresta IP (Nittoseiko Analytech Co., Ltd., cylindrical electrode part C with outer diameter of 16 mm, ring-shaped electrode part D with inner diameter of 30 mm/outer diameter of 40 mm).

The circular electrode includes a first voltage applying electrode A and a plate-shaped insulator B. The first voltage applying electrode A includes the cylindrical electrode part C and the ring-shaped electrode part D. The ring-shaped electrode part D is a cylindrical ring-shaped electrode part having an inner diameter larger than the outer diameter of the cylindrical electrode part C and surrounding the cylindrical electrode part C at a constant interval. The sample T is sandwiched between the cylindrical electrode part C and the ring-shaped electrode part D of the first voltage applying electrode A, and the plate-shaped insulator B.

A current I (A) flowing in a case where a voltage V (V) is applied between the cylindrical electrode part C and the ring-shaped electrode part D of the first voltage applying electrode A is measured. Specifically, a value of the current I (A) after applying a voltage of 500 V for 10 seconds in an environment of a temperature of 22°C and a relative humidity of 55% is obtained.

The surface resistivity ps (Ω/□) of the sample T is calculated by the following expression. Here, d (mm) is an outer diameter of the cylindrical electrode part C, and D (mm) is an inner diameter of the ring-shaped electrode part D. $ρs = π \times \left(D+d\right) / \left(D-d\right) \times \left(V/I\right)$

### -Volume Resistivity-

The circular electrode used for measuring the volume resistivity includes a second voltage applying electrode B' instead of the plate-shaped insulator B in the circular electrode shown in FIG. 3.

The sample T is sandwiched between the cylindrical electrode part C and the ring-shaped electrode part D of the first voltage applying electrode A, and the second voltage applying electrode B'. The thickness (cm) of the sample T is measured in advance with an eddy-current type film thickness meter (for example, CTR-1500E, SANKO ELECTRONIC LABORATORY CO., LTD.).

A current I (A) flowing in a case where a voltage V (V) is applied between the cylindrical electrode part C of the first voltage applying electrode A and the second voltage applying electrode B is measured. Specifically, a value of the current I (A) after applying a voltage of 500 V for 10 seconds in an environment of a temperature of 22°C and a relative humidity of 55% is obtained.

The volume resistivity pv (Ω·cm) of the sample T is calculated by the following expression. Here, 2.011 is an electrode coefficient. $ρv = 2.011 \times \left(V/I\right) \times t$

### -Area Ratio of Exposed Portions of Conductive Carbon Particles-

A surface of the intermediate transfer body onto which a toner image is transferred (an outer peripheral surface in a case where the intermediate transfer body is in the form of a belt or a roll) is observed from directly above with a scanning electron microscope (SEM). Images at a magnification of 2,000 times are acquired at three or more locations. Using image analysis software ImageJ, binarization processing is performed to detect exposed portions of the conductive carbon particles. For each observation location, an area ratio (%) of the exposed portions of the conductive carbon particles is obtained, and an arithmetic mean of these area ratios is used as the area ratio (%) of the exposed portions of the conductive carbon particles.

### -Surface Adsorption Force-

The evaluation of the surface adsorption force of the intermediate transfer body is performed with an atomic force microscope (AFM). The measurement is performed in an environment set to a temperature of 11°C and a relative humidity of 15%. The probe used is a silicon cantilever.

On a surface of the intermediate transfer body onto which a toner image is transferred (an outer peripheral surface when the intermediate transfer body is in the form of a belt or a roll), a range of 2 µm × 2 µm is selected as an analysis region. In this analysis region, the region is divided into small regions of 400 nm × 400 nm, and force-distance curves are acquired at 512 points. Acquisition of the force-distance curves is performed by driving a piezoelectric element at a frequency of 2,000 Hz to cause a tip of the silicon cantilever to reciprocate with respect to the surface of the intermediate transfer body. At each point, a force-distance curve between the probe and the surface of the intermediate transfer body is acquired, and a surface adsorption force (nN) is derived based on the data.

Hereinafter, components and compositions constituting the semiconductive layer of the intermediate transfer body will be described in detail.

### [Resin]

From the viewpoints of strength, durability, environmental stability, cleanability, and the like, the semiconductive layer contains at least one resin selected from the group consisting of a polyimide resin, a polyamideimide resin, an aromatic polyether ether ketone resin, a polyphenylene sulfide resin, and a polyetherimide resin. One type of the resin may be used alone, or two or more types thereof may be used in combination.

### [Conductive Carbon Particles]

Examples of the conductive carbon particles include carbon particles such as furnace black, thermal black, channel black, ketjen black, acetylene black, and color black.

The conductive carbon particles may be subjected to various surface treatments. Examples of the surface treatment include known surface treatments such as a resin coating treatment and a fluorine coating treatment.

From the viewpoint of suppressing the volume resistivity pv of the semiconductive layer to a low level, the number average particle diameter of the conductive carbon particles is, for example, preferably 15 nm or more, more preferably 18 nm or more, and still more preferably 20 nm or more.

From the viewpoint of efficiently forming the conductive paths by dispersion, the number average particle diameter of the conductive carbon particles is, for example, preferably 35 nm or less, more preferably 30 nm or less, and still more preferably 28 nm or less.

The number average particle diameter of the conductive carbon particles is obtained by observing a magnified cross section of the semiconductive layer with a microscope, measuring major axes of 100 randomly selected conductive carbon particles, and arithmetically averaging the major axes.

From the viewpoint of setting the values of the surface resistivity ps and the volume resistivity pv of the intermediate transfer body within an appropriate range, the content of the conductive carbon particles contained in the semiconductive layer is, for example, preferably 15 parts by mass or more and 35 parts by mass or less, more preferably 18 parts by mass or more and 30 parts by mass or less, and still more preferably 20 parts by mass or more and 28 parts by mass or less with respect to 100 parts by mass of the resin.

### [Silicone Oil]

The semiconductive layer contains at least one silicone oil selected from the group consisting of dimethyl polysiloxane and an organic group-substituted derivative of dimethyl polysiloxane. The silicone oil is presumed to act as a dispersant for the conductive carbon particles.

From the viewpoint of presumed excellent action as a dispersant for the conductive carbon particles, the silicone oil is, for example, preferably a modified silicone oil in which an organic group is introduced into a side chain. As the organic group, for example, a polyether group, an aralkyl group having an aromatic ring, or the like is preferable. Specific examples thereof include a polyether-modified silicone oil in which a polyether group is introduced and an aralkyl-modified silicone oil in which an aralkyl group having an aromatic ring is introduced.

From the viewpoint of expecting the action as a dispersant for the conductive carbon particles, the content of the silicone oil contained in the semiconductive layer is, for example, preferably 0.5% by mass or more and 5% by mass or less, more preferably 0.8% by mass or more and 4% by mass or less, and still more preferably 1% by mass or more and 3% by mass or less with respect to the total solid content of the semiconductive layer.

A content ratio (mass basis) of the conductive carbon particles and the silicone oil contained in the semiconductive layer is, for example, preferably 100:2 to 100:40, more preferably 100:3 to 100:20, and still more preferably 100:4 to 100:15.

A thickness of the semiconductive layer is, for example, preferably 40 µm or more and 120 µm or less, more preferably 50 µm or more and 110 µm or less, and still more preferably 60 µm or more and 100 µm or less.

The thickness of the semiconductive layer is measured using an eddy current type film thickness meter. The number of measurement points is 18 points in total, which is 6 points at equal intervals in a circumferential direction of the intermediate transfer body and 3 points at a center portion and both end portions in a width direction of the intermediate transfer body. The measured values of the 18 measurement points are arithmetically averaged.

A thickness of the intermediate transfer body is, for example, preferably 40 µm or more and 120 µm or less, more preferably 50 µm or more and 110 µm or less, and still more preferably 60 µm or more and 100 µm or less.

The thickness of the intermediate transfer body is measured using an eddy current type film thickness meter. The number of measurement points is 18 points in total, which is 6 points at equal intervals in a circumferential direction of the intermediate transfer body and 3 points at a center portion and both end portions in a width direction of the intermediate transfer body. The measured values of the 18 measurement points are arithmetically averaged.

Examples of a method for producing the intermediate transfer body include a manufacturing method of preparing a coating solution for forming at least the semiconductive layer, applying the coating solution to a mold to form a coating film, and drying the coating film to form the semiconductive layer. As necessary, a baking step of the semiconductive layer is further performed.

### <Image Forming Apparatus and Transfer Unit>

An image forming apparatus according to the present exemplary embodiment includes a photoreceptor, a charging device that charges a surface of the photoreceptor, an electrostatic charge image forming device that forms an electrostatic charge image on the charged surface of the photoreceptor, a developing device that develops, with a developer containing a toner, the electrostatic charge image formed on the surface of the photoreceptor into a toner image, and a transfer device that includes an intermediate transfer body and transfers the toner image formed on the surface of the photoreceptor to a surface of a recording medium via the intermediate transfer body. The semiconductor member according to the present exemplary embodiment is applied as the intermediate transfer body.

The image forming apparatus according to the present exemplary embodiment is an apparatus of an intermediate transfer method. The transfer device is formed as a transfer unit including an intermediate transfer body, a primary transfer device that performs primary transfer of the toner image formed on the surface of the photoreceptor to the surface of the intermediate transfer body, and a secondary transfer device that performs secondary transfer of the toner image transferred to the surface of the intermediate transfer body to the surface of a recording medium.

The image forming apparatus according to the present exemplary embodiment may further include a fixing device that fixes the toner image transferred to the surface of the recording medium, a photoreceptor cleaning device that cleans the surface of the photoreceptor before charging after the transfer of the toner image, a discharging device that irradiates the surface of the photoreceptor with discharging light after transfer of the toner image and before charging to discharge the surface, and the like. In the image forming apparatus according to the present exemplary embodiment, the portion including the developing device may have a cartridge structure (process cartridge) which is mounted to and demounted from the image forming apparatus.

An example of the image forming apparatus according to the present exemplary embodiment will be described below, but the present invention is not limited thereto. Hereinafter, among the parts shown in the drawings, main parts will be described, and others will not be described.

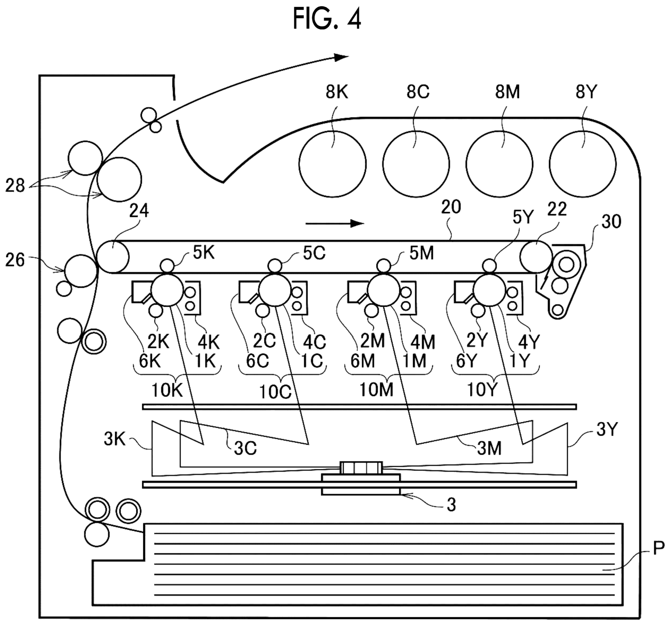

FIG. 4 is a schematic configuration diagram showing the image forming apparatus according to the present exemplary embodiment.

The image forming apparatus shown in FIG. 4 includes first to fourth image forming units 10Y, 10M, 10C, and 10K adopting an electrophotographic method that output images of colors, yellow (Y), magenta (M), cyan (C), and black (K), based on color-separated image data. These image forming units (hereinafter, simply called "units" in some cases) 10Y, 10M, 10C, and 10K are arranged in a row in the horizontal direction in a state of being spaced apart by a predetermined distance. The units 10Y, 10M, 10C, and 10K may be process cartridges that are mounted to and demounted from the image forming apparatus.

An intermediate transfer belt (an example of the intermediate transfer body) 20 passing through above the units 10Y, 10M, 10C, and 10K extends under the units. The intermediate transfer belt 20 is looped around a driving roll 22 and a support roll 24, which are in contact with an inner surface of the intermediate transfer belt 20, and runs toward the fourth unit 10K from the first unit 10Y. Force is applied to the support roll 24 in a direction away from the driving roll 22 by a spring or the like (not shown in the drawing). Tension is applied to the intermediate transfer belt 20 looped over the two rolls. An intermediate transfer belt cleaning device 30 facing the driving roll 22 is provided on an image holding surface side of the intermediate transfer belt 20.

In the cleaning device 30, a cleaning blade is provided as a member that removes residual toner and paper dust on the intermediate transfer belt 20 and cleans a surface of the intermediate transfer belt 20.

Yellow, magenta, cyan, and black toners contained in containers of toner cartridges 8Y, 8M, 8C, and 8K are supplied to developing devices 4Y, 4M, 4C, and 4K of the units 10Y, 10M, 10C, and 10K, respectively.

The first to fourth units 10Y, 10M, 10C, and 10K have the same configuration and operation. Therefore, in the present specification, as a representative, the first unit 10Y will be described which is placed on the upstream side of the running direction of the intermediate transfer belt and forms a yellow image.

The first unit 10Y includes a photoreceptor 1Y. Around the photoreceptor 1Y, a charging roll (an example of the charging device) 2Y that charges the surface of the photoreceptor 1Y at a predetermined potential, an exposure device (an example of the electrostatic charge image forming device) 3 that exposes the charged surface to a laser beam 3Y based on color-separated image signals to form an electrostatic charge image, a developing device 4Y that develops the electrostatic charge image by supplying a charged toner to the electrostatic charge image, a primary transfer roll (an example of the primary transfer device) 5Y that transfers the developed toner image onto the intermediate transfer belt 20, and a photoreceptor cleaning device 6Y that removes the residual toner on the surface of the photoreceptor 1Y after the primary transfer are arranged in this order.

The primary transfer roll 5Y is disposed on the inner side of the intermediate transfer belt 20, at a position facing the photoreceptor 1Y. A bias power source (not shown in the drawing) for applying a primary transfer bias is connected to primary transfer rolls 5Y, 5M, 5C, and 5K of each unit.

A secondary transfer roll (an example of a secondary transfer device) 26 is disposed outside the intermediate transfer belt 20 and is provided at a position facing the support roll 24. A bias power source (not illustrated) for applying a secondary transfer bias is connected to the secondary transfer roll 26.

Hereinafter, the operation that the first unit 10Y carries out to form a yellow image will be described.

First, prior to the operation, the surface of the photoreceptor 1Y is charged to a potential of -600 V to -800 V by the charging roll 2Y.

The photoreceptor 1Y is formed of a photosensitive layer laminated on a conductive (for example, volume resistivity at 20°C: 1 × 10⁻⁶ Ω·cm or less) substrate. The photosensitive layer has properties in that although this layer usually has a high resistance (resistance of a general resin), in a case where the photosensitive layer is irradiated with the laser beam, the specific resistance of the portion irradiated with the laser beam changes. The surface of the charged photoreceptor 1Y is irradiated with the laser beam 3Y from the exposure device 3 according to the image data for yellow transmitted from the control unit not shown in the drawing. As a result, an electrostatic charge image of the yellow image pattern is formed on the surface of the photoreceptor 1Y.

The electrostatic charge image is an image formed on the surface of the photoreceptor 1Y by charging. This image is a so-called negative latent image formed in a manner in which the electric charges with which the surface of the photoreceptor 1Y is charged flow due to the reduction in the specific resistance of the portion of the photosensitive layer irradiated with the laser beam 3Y, but the electric charges in a portion not being irradiated with the laser beam 3Y remain.

The electrostatic charge image formed on the photoreceptor 1Y rotates to a predetermined development position as the photoreceptor 1Y runs. Then, at the development position, the electrostatic charge image on the photoreceptor 1Y is developed and visualized as a toner image by the developing device 4Y.

The developing device 4Y contains, for example, an electrostatic charge image developer that contains at least a yellow toner and a carrier. By being agitated in the developing device 4Y, the yellow toner undergoes triboelectrification, carries electric charges of the same polarity (negative polarity) as the electric charges with which the surface of the photoreceptor 1Y is charged, and is held on a developer roll (an example of a developer holder). As the surface of the photoreceptor 1Y passes through the developing device 4Y, the yellow toner electrostatically adheres to the discharged latent image portion on the surface of the photoreceptor 1Y, and the latent image is developed by the yellow toner. The photoreceptor 1Y on which the yellow toner image is formed continuously runs at a speed determined in advance, and the developed toner image on the photoreceptor 1Y is transported to a primary transfer position determined in advance.

In a case where the yellow toner image on the photoreceptor 1Y is transported to the primary transfer position, a primary transfer bias is applied to the primary transfer roll 5Y, and an electrostatic force from the photoreceptor 1Y toward the primary transfer roll 5Y acts on the toner image, and the toner image on the photoreceptor 1Y is transferred onto the intermediate transfer belt 20. The transfer bias applied at this time has a polarity (+) opposite to the polarity (-) of the toner. In the first unit 10Y, the transfer bias is set, for example, to +10 µA under the control of the control unit (not shown in the drawing).

The primary transfer bias applied to the primary transfer rolls 5M, 5C, and 5K following the second unit 10M is also controlled according to the first unit.

In this way, the intermediate transfer belt 20 to which the yellow toner image is transferred in the first unit 10Y is sequentially transported through the second to fourth units 10M, 10C, and 10K, and the toner images of the respective colors are superimposed, and thus multiple transfer is performed.

The intermediate transfer belt 20 to which the toner images of four colors are multiple-transferred through the first to fourth units reaches a secondary transfer portion configured of the intermediate transfer belt 20, the support roll 24, and the secondary transfer roll 26. On the other hand, via a supply mechanism, recording paper P (an example of recording medium) is supplied at a predetermined timing to the gap between the secondary transfer roll 26 and the intermediate transfer belt 20 that are in contact with each other. Furthermore, secondary transfer bias is applied to the support roll 24. The transfer bias that is applied at this time has a (-) polarity that is the identical polarity to the toner polarity (-), and the electrostatic force from the intermediate transfer belt 20 toward the recording paper P acts on the toner image, and the toner image on the intermediate transfer belt 20 is transferred onto the recording paper P. The secondary transfer bias to be applied at this time is determined according to the resistance detected by a resistance detecting unit (not shown in the drawing) for detecting the resistance of the secondary transfer portion, and the voltage thereof is controlled.

The recording paper P to which the toner image has been transferred is transported into a pressure contact portion (nip portion) of a pair of fixing rolls in a fixing device 28, the toner image is fixed to the surface of the recording paper P, and a fixed image is formed. The recording paper P on which the colored image has been fixed is transported to an output portion, and a series of colored image forming operations is finished.

As the recording paper P to which the toner image is transferred, plain paper that is used in electrophotographic copy machines, printers, or the like can be given as an example. Examples of the recording medium include a resin sheet in addition to the paper.

### [Examples]

Hereinafter, exemplary embodiments of the invention will be described in detail based on examples, but the exemplary embodiments of the invention are not limited to the examples.

In the following description, "parts" and "%" are on a mass basis unless otherwise specified.

In the following description, the synthesis, the treatment, the production, and the like are carried out at room temperature (25°C ± 3°C) unless otherwise specified.

### <Production of Intermediate Transfer Belt>

As an exemplary embodiment of the intermediate transfer body according to the present disclosure, an endless belt-like member is produced.

### [Example 1]

### -Production of Coating Solution-

Conductive carbon particles (number average primary particle diameter of 25 nm, Orion Engineered Carbons GmbH, Special Black SB4) are added to polyimide varnish (solid content of 18% by mass, solvent: NMP, UNITIKA LTD., U-imido Varnish CR) at 35 parts by mass with respect to 100 parts by mass of the solid content of the polyimide. Furthermore, aralkyl-modified silicone oil (Shin-Etsu Chemical Co., Ltd., KF-410) is added thereto at 1.3 parts by mass with respect to 100 parts by mass of the solid content of the polyimide varnish. The dispersion liquid is obtained by passing through an orifice having a diameter of 0.1 mm at a pressure of 200 MPa using a high-pressure collision-type disperser (JOKOH Co., Ltd.) and performing collision of the slurry divided into two parts 10 times. The polyimide varnish (solid content of 18% by mass, solvent: NMP, UNITIKA LTD., U-imido Varnish CH) is added to the dispersion liquid, and the number of parts of the conductive carbon particles is adjusted to 28 parts with respect to 100 parts of the total solid content of the polyimide, and the number of parts of the aralkyl-modified silicone oil is adjusted to 1.0 part with respect to 100 parts of the total solid content of the coating solution to obtain the coating solution.

### -Production of Intermediate Transfer Belt-

An aluminum cylindrical body having an outer diameter of 280 mm and a length of 600 mm is prepared. The coating solution is jetted onto the outer peripheral surface of the cylindrical body through a dispenser with a width of 500 mm such that the thickness is 80 µm. The cylindrical body on which the coating film is formed is heated at a temperature of 140°C for 30 minutes while being kept horizontal to dry the coating film. The dried coating film is heated for 120 minutes such that the maximum temperature reaches 320°C to form a semiconductive layer. The semiconductive layer is peeled off from the mold by being manually removed from the mold. The semiconductive layer is cut at a center portion in the axial direction to a width of 363 mm to obtain an intermediate transfer belt having a thickness of 80 µm.

### [Example 2]

An intermediate transfer belt is produced in the same manner as in Example 1, except that the silicone oil is changed to polyether-modified silicone oil (Shin-Etsu Chemical Co., Ltd., KP-126).

### [Example 3]

An intermediate transfer belt is produced in the same manner as in Example 1, except that the silicone oil is changed to another aralkyl-modified silicone oil (BYK Japan KK, BYK-323).

### [Example 4]

An intermediate transfer belt is produced in the same manner as in Example 1, except that the number of parts of the conductive carbon particles in the coating solution is changed to 30 parts.

### [Example 5]

An intermediate transfer belt is produced in the same manner as in Example 1, except that the number of parts of the conductive carbon particles in the coating solution is changed to 24 parts.

### [Example 6]

An intermediate transfer belt is produced in the same manner as in Example 1, except that the number of parts of the silicone oil in the dispersion liquid is changed to 2.0 parts, and the number of parts of the conductive carbon particles in the coating solution is changed to 26 parts.

### [Comparative Example 1]

### -Production of Coating Solution-

Conductive carbon particles (number average primary particle diameter of 13 nm, Orion Engineered Carbons GmbH, FW1) are added to polyimide varnish (solid content of 18% by mass, solvent: NMP, UNITIKA LTD., U-imido Varnish CR) at 35 parts by mass with respect to 100 parts by mass of the total solid content of the polyimide. The dispersion liquid is obtained by passing through an orifice having a diameter of 0.1 mm at a pressure of 200 MPa using a high-pressure collision-type disperser (JOKOH Co., Ltd.) and performing collision of the slurry divided into two parts 10 times. The polyimide varnish (solid content of 18% by mass, solvent: NMP, UNITIKA LTD., U-imido Varnish CH) is added to the dispersion liquid, and the number of parts of the conductive carbon particles is adjusted to 22 parts with respect to 100 parts of the total solid content of the polyimide to obtain the coating solution.

Using the above-described coating solution, an intermediate transfer belt is produced in the same manner as in Example 1.

### [Comparative Example 2]

### -Production of Coating Solution-

Conductive carbon particles (number average primary particle diameter of 25 nm, Orion Engineered Carbons GmbH, Special Black SB4) are added to polyimide varnish (solid content of 18% by mass, solvent: NMP, UNITIKA LTD., U-imido Varnish CR) at 35 parts by mass with respect to 100 parts by mass of the total solid content of the polyimide. The dispersion liquid is obtained by passing through an orifice having a diameter of 0.1 mm at a pressure of 200 MPa using a high-pressure collision-type disperser (JOKOH Co., Ltd.) and performing collision of the slurry divided into two parts 10 times. The polyimide varnish (solid content of 18% by mass, solvent: NMP, UNITIKA LTD., U-imido Varnish CH) is added to the dispersion liquid, and the number of parts of the conductive carbon particles is adjusted to 22 parts with respect to 100 parts of the total solid content of the polyimide to obtain the coating solution.

Using the above-described coating solution, an intermediate transfer belt is produced in the same manner as in Example 1.

The number of conductive paths, the surface resistivity, and the volume resistivity of each of the intermediate transfer belts of Examples and Comparative Examples are measured by the method described above.

### <Performance evaluation of intermediate transfer belt>

### [Density Unevenness of Image]

The intermediate transfer belt is mounted on an image forming apparatus (FUJIFILM Business Innovation Corporation, Apeos 7071).

In an environment of a temperature of 10°C and a relative humidity of 15%, a magenta halftone image having an image density of 30% is output to both sides of 100,000 sheets of A3 size plain paper. Next, the magenta halftone image having an image density of 30% is output to one sheet of A3 size plain paper. The image density of the last one sheet is randomly measured at 10 points using an image densitometer X-Rite 938 (manufactured by X-Rite, Inc), and an image density difference, which is a difference between a maximum value and a minimum value of the measured image density, is obtained and classified as follows. The results are shown in Table 1. Up to G2 is within an allowable range in practical use.
G0: The difference in image density is 0.2 or less, which is not visually recognized.
G1: The difference in image density is more than 0.2 and 0.25 or less, which is difficult to visually recognize the difference.
G2: The difference in image density is more than 0.25 and 0.3 or less, which is in the acceptable range.
G3: The difference in image density is more than 0.3, and is outside the acceptable range.

### [Color Spots of Image]

The intermediate transfer belt is mounted on an image forming apparatus (FUJIFILM Business Innovation Corporation, Apeos 7071).

In an environment of a temperature of 28°C and a relative humidity of 85%, a black halftone image having an image density of 30% is output to both sides of 100,000 sheets of A3 size plain paper. Next, the black halftone image having an image density of 30% is output to one sheet of A3 size plain paper. The one image is visually observed, and the presence or absence of the color spots is classified as follows. The results are shown in Table 1. Up to G2 is within an allowable range in practical use.
G0: Color spots do not occur.
G1: One color spot having a size of 0.1 mm to 0.5 mm occurs.
G2: Two or three color spots having a size of 0.1 mm to 0.5 mm occur.
G3: Four or more color spots having a size of 0.1 mm to 0.5 mm occur, or color spot having a size of more than 0.5 mm occurs.

### [Maintenance of cleaning performance]

An intermediate transfer belt was mounted in an image forming apparatus (FUJIFILM Business Innovation Corporation, DocuCentre-V C5575).

30,000 sheets of a chart were output, in which 10 mm-square black images with an image density of 100% were formed at a central portion and at both end portions of A5-size plain paper, and no image was formed in other areas. The charts were visually observed, and maintenance of cleaning performance was classified as described below. "Cleaning failure" in the following criteria means that, due to turning-up of the cleaning blade, toner contamination of the paper and running failure of the intermediate transfer belt occur. The results are shown in Table 2.
A: No cleaning failure occurred even after 30,000 sheets were run.
B: Cleaning failure occurred after 20,000 sheets were run.
C: Cleaning failure occurred after 15,000 sheets were run.
D: Cleaning failure occurred when 10,000 sheets or fewer were run.

**[Table 1]**

| | Semiconductive layer | | | | | | | Image | |
|---|---|---|---|---|---|---|---|---|---|
| | Resin | Conductive carbon particles | Silicone oil | ρs | ρν | ρs-pν | Number of conductive paths | Density unevenness | Color spots |
| | Type | Particle diameter | Type | logΩ/□ | logQ·cm | logΩ/□ -logQ·cm | | | |
| Comparative Example 1 | Polyimide | 13 nm | - | 10.1 | 9.2 | 0.9 | 130 | G0 | G3 |
| Example 1 | Polyimide | 25 nm | Aralkyl-modified | 10.4 | 8.8 | 1.6 | 115 | G1 | G0 |
| Example 2 | Polyimide | 25 nm | Polyether-modified | 10.2 | 8.7 | 1.5 | 110 | G1 | G1 |
| Example 3 | Polyimide | 25 nm | Aralkyl-modified | 10.6 | 8.7 | 1.9 | 110 | G1 | G0 |
| Example 4 | Polyimide | 25 nm | Aralkyl-modified | 8.5 | 7.0 | 1.5 | 180 | G0 | G1 |
| Example 5 | Polyimide | 25 nm | Aralkyl-modified | 11.5 | 10.0 | 1.5 | 110 | G1 | G1 |
| Example 6 | Polyimide | 25 nm | Aralkyl-modified | 10.8 | 9.0 | 1.8 | 150 | G0 | G0 |
| Comparative Example 2 | Polyimide | 25 nm | - | 10.4 | 8.8 | 1.6 | 68 | G3 | G0 |

**[Table 2]**

| | Semiconductive layer | | | | | Maintenance of cleaning performance |
|---|---|---|---|---|---|---|
| | Resin | Conductive carbon particles | Silicone oil | Conductive carbon particles | Surface adsorption force | |
| | Type | Particle diameter | Type | Area ratio of exposed portions | | |
| Comparative Example 1 | Polyimide | 13nm | - | 28.0% | 5.60nN | D |
| Example 1 | Polyimide | 25nm | Aralkyl-modified | 34.0% | 3.30nN | A |
| Example 2 | Polyimide | 25nm | Polyether-modified | 35.0% | 3.20nN | A |
| Example 3 | Polyimide | 25nm | Aralkyl-modified | 33.5% | 3.45nN | B |
| Example 4 | Polyimide | 25nm | Aralkyl-modified | 36.0% | 3.25nN | A |
| Example 5 | Polyimide | 25nm | Aralkyl-modified | 33.0% | 3.55nN | B |
| Example 6 | Polyimide | 25nm | Aralkyl-modified | 35.0% | 3.45nN | B |
| Comparative Example 2 | Polyimide | 25nm | - | 33.0% | 3.85nN | C |

The intermediate transfer body, the transfer unit, and the image forming apparatus according to the present disclosure include the following aspects.

### (Supplementary Note)

(((1))) An intermediate transfer body comprising:
   a semiconductive layer containing:
      at least one resin selected from the group consisting of a polyimide resin, a polyamideimide resin, an aromatic polyether ether ketone resin, a polyphenylene sulfide resin, and a polyetherimide resin;
      conductive carbon particles; and
      at least one silicone oil selected from the group consisting of dimethyl polysiloxane and an organic group-substituted dimethyl polysiloxane,
   wherein a number of conductive paths calculated based on three-dimensional structural analysis of a cross section of the semiconductive layer in a thickness direction is 110 or more, and
   a value obtained by subtracting a volume resistivity pv (log Ω·cm) of the semiconductive layer from a surface resistivity ps (log Ω/□) of the semiconductive layer is 1.5 or more and 2.0 or less.
(((2))) The intermediate transfer body according to (((1))),
   wherein the surface resistivity ps of the semiconductive layer is 8.0 log Ω/□ or more and 12.0 log Ω/□ or less.
(((3))) The intermediate transfer body according to (((1))) or (((2))),
   wherein the volume resistivity pv of the semiconductive layer is 7.0 log Ω·cm or more and 11.0 log Ω·cm or less.
(((4))) The intermediate transfer body according to any one of (((1))) to (((3))),
   wherein a number average particle diameter of the conductive carbon particles is 15 nm or more and 35 nm or less.
(((5))) The intermediate transfer body according to any one of (((1))) to (((3))),
   wherein a number average particle diameter of the conductive carbon particles is 21 nm or more and 30 nm or less.
(((6))) The intermediate transfer body according to any one of (((1))) to (((5))),
   wherein the number of conductive paths is 200 or less.
(((7))) The intermediate transfer body according to any one of (((1))) to (((6))),
   wherein the silicone oil includes, as the organic group-substituted dimethyl polysiloxane, an aralkyl-modified silicone oil.
(((8))) The intermediate transfer body according to any one of (((1))) to (((7))),
   wherein a surface adsorption force at a temperature of 11°C and a relative humidity of 15% is 3.8 nN or less.
(((9))) The intermediate transfer body according to any one of (((1))) to (((8))),
   wherein the conductive carbon particles are exposed on a surface of the intermediate transfer body, and an area ratio of exposed portions of the conductive carbon particles occupying the surface is 33% or more.
(((10))) A transfer unit comprising:
   the intermediate transfer body according to any one of (((1))) to (((9)));
   a primary transfer device that transfers a toner image formed on a surface of a photoreceptor to a surface of the intermediate transfer body; and
   a secondary transfer device that transfers the toner image transferred to the surface of the intermediate transfer body to a surface of a recording medium.
(((11))) An image forming apparatus comprising:
   a photoreceptor;
   a charging device that charges a surface of the photoreceptor;
   an electrostatic charge image forming device that forms an electrostatic charge image on the charged surface of the photoreceptor;
   a developing device that develops, with a developer containing a toner, the electrostatic charge image formed on the surface of the photoreceptor into a toner image; and
   a transfer device that transfers the toner image formed on the surface of the photoreceptor to a surface of a recording medium,
   wherein the transfer device includes the intermediate transfer body according to any one of (((1))) to (((9))), a primary transfer device that transfers the toner image formed on the surface of the photoreceptor to a surface of the intermediate transfer body, and a secondary transfer device that transfers the toner image transferred to the surface of the intermediate transfer body to the surface of the recording medium.

According to (((1))), (((2))), (((3))), (((4))), (((5))), or (((6))), there is provided an intermediate transfer body in which density unevenness is less likely to occur in an image as compared with an intermediate transfer body in which the number of conductive paths of the semiconductive layer is less than 110, and an intermediate transfer body in which color spots are less likely to occur in an image as compared with an intermediate transfer body in which the value of ps - pv of the semiconductive layer is less than 1.5.

According to (((7))), there is provided an intermediate transfer body in which color spots are less likely to occur in an image as compared with an intermediate transfer body in which the semiconductive layer contains a polyether-modified silicone oil and does not contain an aralkyl-modified silicone oil.

According to (((8))), there is provided an intermediate transfer body having excellent in maintaining cleaning performance as compared with an intermediate transfer body in which a surface adsorption force at a temperature of 11°C and a relative humidity of 15% is 3.8 nN or less.

According to (((9))), there is provided an intermediate transfer body having excellent in maintaining cleaning performance as compared with an area ratio of exposed portions of the conductive carbon particles occupying the surface is 33% or more.

According to (((10))), there is provided a transfer unit in which density unevenness is less likely to occur in an image as compared with a transfer unit in which the number of conductive paths of the semiconductive layer of the intermediate transfer body is less than 110, and a transfer unit in which color spots are less likely to occur in an image as compared with a transfer unit in which the value of ps - pv of the semiconductive layer of the intermediate transfer body is less than 1.5.

According to (((11))), there is provided an image forming apparatus in which density unevenness is less likely to occur in an image as compared with an image forming apparatus in which the number of conductive paths of the semiconductive layer of the intermediate transfer body is less than 110, and an image forming apparatus in which color spots are less likely to occur in an image as compared with an image forming apparatus in which the value of ps - pv of the semiconductive layer of the intermediate transfer body is less than 1.5.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

50: intermediate transfer body
52: semiconductive layer
1Y, 1M, 1C, 1K: photoreceptor
2Y, 2M, 2C, 2K: charging roll (example of charging device)
3: exposure device (example of electrostatic charge image forming device)
3Y, 3M, 3C, 3K: laser beam
4Y, 4M, 4C, 4K: developing device
5Y, 5M, 5C, 5K: primary transfer roll (example of primary transfer device)
6Y, 6M, 6C, 6K: photoreceptor cleaning device
8Y, 8M, 8C, 8K: toner cartridge
10Y, 10M, 10C, 10K: image forming unit
20: intermediate transfer belt (example of intermediate transfer body)
22: driving roll
24: support roll
26: secondary transfer roll (example of secondary transfer device)
28: fixing device
30: intermediate transfer belt cleaning device
P: recording paper (an example of recording medium)

## Claims

1. An intermediate transfer body comprising:
a semiconductive layer containing
at least one resin selected from the group consisting of a polyimide resin, a polyamideimide resin, an aromatic polyether ether ketone resin, a polyphenylene sulfide resin, and a polyetherimide resin,
conductive carbon particles, and
at least one silicone oil selected from the group consisting of dimethyl polysiloxane and an organic group-substituted dimethyl polysiloxane,
wherein a number of conductive paths calculated based on three-dimensional structural analysis of a cross section of the semiconductive layer in a thickness direction is 110 or more, and
a value obtained by subtracting a volume resistivity pv (log Ω·cm) of the semiconductive layer from a surface resistivity ps (log Ω/□) of the semiconductive layer is 1.5 or more and 2.0 or less.

2. The intermediate transfer body according to claim 1,
wherein the surface resistivity ps of the semiconductive layer is 8.0 log Ω/□ or more and 12.0 log Ω/□ or less.

3. The intermediate transfer body according to claim 1 or 2,
wherein the volume resistivity pv of the semiconductive layer is 7.0 log Ω·cm or more and 11.0 log Ω·cm or less.

4. The intermediate transfer body according to any one of claims 1 to 3,
wherein a number average particle diameter of the conductive carbon particles is 15 nm or more and 35 nm or less.

5. The intermediate transfer body according to any one of claims 1 to 3,
wherein a number average particle diameter of the conductive carbon particles is 21 nm or more and 30 nm or less.

6. The intermediate transfer body according to any one of claims 1 to 5,
wherein the number of conductive paths is 200 or less.

7. The intermediate transfer body according to any one of claims 1 to 6,
wherein the silicone oil includes, as the organic group-substituted dimethyl polysiloxane, an aralkyl-modified silicone oil.

8. The intermediate transfer body according to any one of claims 1 to 7,
wherein a surface adsorption force at a temperature of 11°C and a relative humidity of 15% is 3.8 nN or less.

9. The intermediate transfer body according to any one of claims 1 to 8,
wherein the conductive carbon particles are exposed on a surface of the intermediate transfer body, and an area ratio of exposed portions of the conductive carbon particles occupying the surface is 33% or more.

10. A transfer unit comprising:
the intermediate transfer body according to any one of claims 1 to 9;
a primary transfer device that transfers a toner image formed on a surface of a photoreceptor to a surface of the intermediate transfer body; and
a secondary transfer device that transfers the toner image transferred to the surface of the intermediate transfer body to a surface of a recording medium.

11. An image forming apparatus comprising:
a photoreceptor;
a charging device that charges a surface of the photoreceptor;
an electrostatic charge image forming device that forms an electrostatic charge image on the charged surface of the photoreceptor;
a developing device that develops, with a developer containing a toner, the electrostatic charge image formed on the surface of the photoreceptor into a toner image; and
a transfer device that transfers the toner image formed on the surface of the photoreceptor to a surface of a recording medium,
wherein the transfer device includes the intermediate transfer body according to any one of claims 1 to 9, a primary transfer device that transfers the toner image formed on the surface of the photoreceptor to a surface of the intermediate transfer body, and a secondary transfer device that transfers the toner image transferred to the surface of the intermediate transfer body to the surface of the recording medium.
